(19) **Europäisches Patentamt / European Patent Office / Office européen des brevets**

(11) **EP 4 449 285 B1**

(12) **FASCICULE DE BREVET EUROPEEN**

(45) Date de publication et mention de la délivrance du brevet:
**05.08.2026 Bulletin 2026/32**

(21) Numéro de dépôt: **22834572.4**

(22) Date de dépôt: **08.12.2022**

(51) Classification Internationale des Brevets (IPC):
**G06F 21/56** (2013.01)   **G06N 3/08** (2023.01)
**G06N 3/006** (2023.01)   **G06N 3/045** (2023.01)
**G06N 3/098** (2023.01)

(52) Classification Coopérative des Brevets (CPC):
**G06F 21/56; G06F 21/562; G06N 3/006;**
**G06N 3/098;** G06N 3/045

(86) Numéro de dépôt international:
**PCT/EP2022/085003**

(87) Numéro de publication internationale:
**WO 2023/110625 (22.06.2023 Gazette 2023/25)**

(54) **PROCÉDÉ D'ENTRAÎNEMENT D'UN AGENT AUTONOME À L'AIDE D'UN ALGORITHME D'APPRENTISSAGE PAR RENFORCEMENT, AGENT AUTONOME ASSOCIÉ**

**VERFAHREN ZUM TRAINIEREN EINES AUTONOMEN AGENTEN UNTER VERWENDUNG EINES VERSTÄRKUNGSLERNALGORITHMUS, ZUGEHÖRIGER AUTONOMER AGENT**

**METHOD FOR TRAINING AN AUTONOMOUS AGENT USING A REINFORCEMENT LEARNING ALGORITHM, ASSOCIATED AUTONOMOUS AGENT**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **15.12.2021 FR 2113534**

(43) Date de publication de la demande:
**23.10.2024 Bulletin 2024/43**

(73) Titulaire: **Orange**
**92130 Issy-les-Moulineaux (FR)**

(72) Inventeurs:
- **QUERTIER, Tony**
  **92326 Chatillon (FR)**
- **MARAIS, Benjamin**
  **92326 Chatillon (FR)**
- **FOURNEL, Bertrand**
  **92326 Chatillon (FR)**

(74) Mandataire: **Cabinet Beau de Loménie**
**103, rue de Grenelle**
**75340 Paris Cedex 07 (FR)**

(56) Documents cités:
- **HYRUM S ANDERSON ET AL: "Learning to Evade Static PE Machine Learning Malware Models via Reinforcement Learning", ARXIV.ORG, CORNELL UNIVERSITY LIBRARY, 201 OLIN LIBRARY CORNELL UNIVERSITY ITHACA, NY 14853, 26 January 2018 (2018-01-26), XP080855026**
- **CANGSHUAI WU ET AL: "Enhancing Machine Learning Based Malware Detection Model by Reinforcement Learning", COMMUNICATION AND NETWORK SECURITY, ACM, 2 PENN PLAZA, SUITE 701NEW YORKNY10121-0701USA, 2 November 2018 (2018-11-02), pages 74 - 78, XP058423248, ISBN: 978-1-4503-6567-3, DOI: 10.1145/3290480.3290494**
- **HEMANT RATHORE ET AL: "Robust Android Malware Detection System against Adversarial Attacks using Q-Learning", ARXIV.ORG, CORNELL UNIVERSITY LIBRARY, 201 OLIN LIBRARY CORNELL UNIVERSITY ITHACA, NY 14853, 27 January 2021 (2021-01-27), XP081869673, DOI: 10.1007/S10796-020-10083-8**

## Description

### Domaine technique

La présente invention appartient au domaine général de la sécurité informatique. Elle concerne plus particulièrement un procédé d'entraînement d'un agent autonome mettant en œuvre un algorithme d'apprentissage par renforcement pour améliorer la performance d'un logiciel anti-logiciel malveillant. Elle concerne également un agent autonome configuré pour mettre en œuvre un tel procédé, un procédé d'évaluation de la détectabilité d'un logiciel malveillant par un environnement mettant en œuvre un logiciel anti-logiciel malveillant, un environnement configuré pour mettre en œuvre un tel procédé, et un procédé d'entraînement d'un logiciel anti-logiciel malveillant mettant en œuvre un algorithme d'apprentissage.

### Technique antérieure

Une détection rapide et précise d'attaques, comme par exemple une intrusion ou une manipulation malveillante, voire de menaces d'attaques, dans un équipement informatique ou plus généralement dans un système informatique est une problématique critique pour la sécurité des équipements de ce système. L'ampleur de cette problématique ne cesse en outre de s'accroître de nos jours à mesure que le volume de trafic généré dans les réseaux de communication tend à augmenter.

De manière conventionnelle, la prise en charge de cette problématique est réalisée par des logiciels anti-logiciels malveillants qui sont, à l'heure actuelle, essentiellement des logiciels antivirus, des logiciels anti-espions, des pare-feux ou des logiciels de détection de virus utilisant des mécanismes d'apprentissage automatique.

Ces logiciels anti-logiciels malveillants, également appelés anti-logiciels malveillants, sont configurés pour analyser des données présentes sur un équipement informatique à protéger (tel qu'un serveur ou un ordinateur personnel), ou des données destinées à accéder à cet équipement dans le but de l'infecter. Ces données, dénommées « logiciels malveillants », sont développées dans le but de nuire à l'équipement, sans le consentement d'un utilisateur ou d'un administrateur de cet équipement informatique. Elles englobent notamment les virus, les vers, les chevaux de Troie et les documents informatiques malveillants (ou « maldocs »).

De manière conventionnelle, l'analyse réalisée par ces anti-logiciels malveillants est essentiellement basée sur des règles de détection statiques interdisant l'accès à l'équipement informatique, ou limitant l'accès en stockant ces logiciels malveillants dans un emplacement sécurisé, dénommé « zone de quarantaine » de sorte à les isoler complètement du système d'exploitation de l'équipement.

Plus particulièrement, ladite analyse s'appuie sur une bibliothèque de signatures propres à une ou plusieurs attaques connues, chaque signature associée à une attaque étant caractérisée par une ou plusieurs règles de détection (par exemple, une situation par rapport à un seuil, un motif inclus dans un code informatique ou dans un paquet de données, etc.). Dans ces conditions, les anti-logiciels malveillants actuels ne peuvent pas être considérés comme efficaces en termes de stratégie de protection et de défense face aux logiciels malveillants qui se renouvellent sans cesse, et dont la signature n'est alors pas connue de l'anti-logiciel malveillant.

Une solution consiste à mettre à jour ces règles statiques de manière régulière, mais une telle mécanique entraîne une multiplication des règles de détection dont le nombre rend problématique leur cohérence, et il en résulte que ces anti-logiciels malveillants actuels ne sont pas toujours en mesure de détecter et a fortiori d'interdire ou de limiter l'accès à un logiciel malveillant.

HYRUM S ANDERSON ET AL: "Leaming to Evade Static PE Machine Learning Malware Models via Reinforcement Learning",ARXIV.ORG, CORNELL UNIVERSITY LIBRARY, 201 OLIN LIBRARY CORNELL UNIVERSITY ITHACA, NY 14853, 26 janvier 2018 (2018-01-26) décrit un cadre basé sur l'apprentissage par renforcement pour attaquer les moteurs anti-malware d'exécutables portables statiques.

CANGSHUAI WU ET AL: "Enhancing Machine Learning Based Malware Detection Model by Reinforcement Learning", COMMUNICATION AND NETWORK SECURITY, ACM, 2 novembre 2018 (2018-11-02), pages 74-78, décrit un modèle d'apprentissage par renforcement permettant de générer automatiquement de nouveaux échantillons de logiciels malveillants capables de contourner les systèmes de détection par apprentissage automatique existants.

HEMANT RATHORE ET AL: "Robust Android Malware Detection System against Adversarial Attacks using Q-Learning",ARXIV.ORG, CORNELL UNIVERSITY LIBRARY, 201 OLIN LIBRARY CORNELL UNIVERSITY ITHACA, NY 14853, 27 janvier 2021 (2021-01-27), décrit un système robuste de détection de logiciels malveillants Android contre des attaques adverses utilisant l'apprentissage par renforcement Q-Learning.

### Exposé de l'invention

La présente invention a pour objectif de remédier à tout ou partie des inconvénients de l'art antérieur, notamment ceux exposés ci-avant, en proposant une solution qui permette de déterminer des actions visant à modifier le contenu de logiciels malveillants, de sorte que ces logiciels malveillants modifiés ne soient plus considérés comme étant malveillants par un anti-logiciel malveillant.

Plus particulièrement, la présente invention permet de déterminer des logiciels comme étant malveillants mais qui ne sont pas considérés comme tels par un anti-logiciel malveillant, mais également les raisons pour lesquelles ces logiciels ne sont pas considérés comme malveillants. Ces informations s'avèrent cruciales pour les auteurs d'anti-logiciels malveillants puisqu'elles leur permettent d'améliorer les performances de leurs solutions en termes de détection de logiciels malveillants.

A cet effet, et selon un premier aspect, l'invention concerne un procédé d'entraînement d'un agent autonome mettant en œuvre un algorithme d'apprentissage par renforcement pour améliorer la performance d'un logiciel anti-logiciel malveillant, le procédé étant mis en œuvre par l'agent autonome et comprenant :

- la sélection d'une action visant à modifier le contenu d'un logiciel malveillant ;
- la transmission de l'action sélectionnée à un environnement mettant en œuvre ledit logiciel anti-logiciel malveillant ;
- la réception, en provenance de l'environnement, d'une récompense (r(t+1)) représentative d'une probabilité que le logiciel malveillant modifié par application de l'action sélectionnée (a(t)) soit considéré comme étant bénin par le logiciel anti-logiciel malveillant, la récompense étant définie telle que :

$$r(t+1) = \begin{cases} R \subset \mathrm{R}^+ & si\ p(t+1) < T \\ p(t+1) - p(t) & sinon \end{cases}$$

avec R une valeur réelle positive, T une valeur seuil propre au logiciel anti-logiciel malveillant, p(t+1) un score de détectabilité représentatif d'une probabilité que le logiciel malveillant modifié par application de l'action sélectionnée (a(t)) soit considéré comme étant malveillant par le logiciel anti-logiciel malveillant, et p(t) le score de détectabilité par application d'une action sélectionnée à la précédente itération;

- l'obtention (E120, E150) d'un état (s(t+1)) représentatif du logiciel malveillant modifié par application de l'action sélectionnée (a(t)) ;
- la sélection, la réception d'une récompense et l'obtention d'un état étant itérées tant qu'un critère d'arrêt n'est pas atteint ; et,
- la détermination (E130), par l'algorithme d'apprentissage par renforcement et en fonction des récompenses obtenues, d'une fonction qui, à chaque état, associe au moins une action à exécuter, de sorte à maximiser une somme des récompenses obtenues.

Ainsi le procédé d'entraînement selon le premier aspect s'appuie sur un système d'apprentissage par renforcement comprenant un agent autonome et un environnement pour déterminer la meilleure action ou la meilleure séquence d'actions à appliquer sur le contenu d'un logiciel malveillant, de sorte que ce dernier soit désormais considéré comme ayant un comportement bénin par un anti-logiciel malveillant.

Lorsqu'un logiciel est considéré par un anti-logiciel malveillant comme ayant un comportement bénin (pouvant encore être dit « comportement normal » dans la littérature), il est fait référence au fait que ledit logiciel n'est pas considéré comme étant susceptible d'être utilisé pour réaliser une attaque informatique. On comprend alors que la notion de « comportement bénin » se définit a contrario de celle de comportement malveillant.

Un autre aspect avantageux du procédé proposé, outre la capacité à déterminer la meilleure action ou la meilleure séquence d'actions pour qu'un anti-logiciel malveillant considère un logiciel malveillant comme ayant un comportement bénin, réside dans le fait que ces actions sont déterminées via un apprentissage automatique par renforcement. De cette manière, l'invention tire parti de la capacité de l'agent à découvrir des actions ou des séquences d'actions jusqu'alors inconnues mais améliorant le fait que le logiciel malveillant soit considéré comme ayant un comportement bénin, grâce aux techniques d'intelligence artificielle mises en œuvre lors de l'apprentissage. Il est ici souligné que le logiciel malveillant considéré comme bénin conserve un comportement malveillant. Il s'agit alors d'un faux négatif pour le logiciel anti-logiciel malveillant.

Enfin, il faut également noter que le fait de mettre en œuvre un apprentissage automatique par renforcement permet ne pas avoir à mettre à jour des règles de détection statiques comme cela est le cas pour certains anti-logiciels malveillants. En conséquence, le procédé proposé se révèle être peu coûteux en termes de temps d'expert.

Le procédé permet ainsi de créer une base de données regroupant des logiciels malveillants non détectables. Cette base de données peut être ensuite utilisée pour améliorer des anti-logiciels malveillants, tels que des anti-virus, ou bien encore pour entraîner des modèles de détection de logiciels malveillants par intelligence artificielle.

De plus, des traces de l'action ou de la séquence d'actions ayant permis de modifier un logiciel malveillant en un logiciel malveillant modifié considéré comme bénin, sont conservées, afin d'identifier des failles de certains anti-logiciels malveillants.

De manière générale, on considère que les étapes d'un procédé ne doivent pas être interprétées comme étant liées à une notion de succession temporelle.

Dans des modes particuliers de mise en œuvre, le procédé d'entraînement peut comporter en outre l'une ou plusieurs des caractéristiques suivantes, prises isolément ou selon toutes les combinaisons techniquement possibles.

Dans des modes particuliers de mise en œuvre, l'obtention d'une récompense comprend la réception, en provenance d'un environnement mettant en œuvre le logiciel anti-logiciel malveillant, soit de ladite récompense, soit d'un score de détectabilité représentatif d'une probabilité que le logiciel malveillant modifié par application de l'action sélectionnée soit considéré comme étant malveillant par le logiciel anti-logiciel malveillant. Et l'obtention d'un état comprend soit la réception en provenance de l'environnement dudit état ; soit l'obtention d'un logiciel malveillant sur lequel une action peut être appliquée, et la détermination de l'état en fonction de l'action sélectionnée et du logiciel malveillant obtenu.

Dans des modes particuliers de mise en œuvre, l'algorithme d'apprentissage par renforcement est un algorithme de « Q-learning », et la détermination de la fonction comprend une détermination, pour chaque paire état-action (s, a), d'une valeur $Q^N(s, a)$ telle que

$$Q^N(s,a) = (1-a)\ Q(s,\ a) + a\left(r(t+1) + \gamma \max_{a(t+1)} Q(s(t+1),\ a(t+1))\right)$$

avec $a \subset [0,1]$ un taux d'apprentissage, $Q(s, a)$ une précédente valeur de qualité, $r(t+1)$ une récompense, $\gamma \subset [0,1]$ un taux d'actualisation, $s(t+1)$ un état suivant et $a(t+1)$ une action pouvant être exécutée à partir de l'état $s(t+1)$, de sorte à déterminer une fonction-Q optimale.

L'utilisation d'un tel algorithme est avantageuse en ce qu'il est simple à implémenter puisque les valeurs-Q de chaque paire état-action sont mises à jour par itération jusqu'à ce qu'une fonction-Q converge vers une fonction-Q optimale, et puisqu'une simple table d'association (parfois nommée « tableau-Q ») peut être utilisée pour enregistrer les valeurs-Q de toutes ces paires état-action possibles.

Dans des modes particuliers de mise en œuvre, l'algorithme de « Q-learning » est un algorithme de « Q-learning » profond, et la détermination de la valeur $Q^N(s, a)$ de chaque paire état-action (s, a) est mise en œuvre en utilisant un réseau de neurones profond.

L'utilisation d'un tel algorithme s'avère particulièrement avantageux en termes de gestion des ressources et de données lorsque le cardinal de l'ensemble des états S (décrit ci-après) est important.

Dans des modes particuliers de mise en œuvre, la sélection d'une action comprend l'application d'une stratégie Epsilon Greedy.

Dans des modes particuliers de mise en œuvre, l'algorithme d'apprentissage par renforcement est un algorithme de gradient de politique, et la fonction déterminée est une fonction, qui, pour chaque état, détermine une probabilité qu'une action soit exécutée.

Dans des modes particuliers de mise en œuvre, l'action est sélectionnée parmi un ensemble d'actions comprenant :

- la modification de la valeur du champ d'un entête du logiciel malveillant ;
- l'ajout au contenu du logiciel malveillant d'une séquence de caractères extraite d'un fichier bénin ;
- l'ajout de caractères ou d'instructions déterminés au contenu du logiciel malveillant;
- l'ajout d'une librairie extraite d'un fichier bénin au contenu du logiciel malveillant;
- le renommage d'une section du contenu du logiciel malveillant ;
- la suppression d'un mode débuggeur du contenu du logiciel malveillant ;
- la modification d'une estampille temporelle du contenu du logiciel malveillant ;
- la modification d'une valeur de hachage calculée pour un entête optionnel du contenu du logiciel malveillant ; et,
- la décompression d'une version exécutable du logiciel malveillant.

Selon un second aspect, l'invention concerne un procédé d'évaluation de la détectabilité d'un logiciel malveillant par un environnement mettant en œuvre au moins un logiciel anti-logiciel malveillant, le procédé comprenant :

- la réception (E200), en provenance d'un agent autonome mettant en œuvre un algorithme d'apprentissage par renforcement, d'une action (a(t)) visant à modifier le contenu du logiciel malveillant ;

- la modification (E220) du contenu du logiciel malveillant par application de ladite action (a(t)), de sorte à obtenir un logiciel malveillant modifié ;
- l'analyse (E230), par le logiciel anti-logiciel malveillant, du logiciel malveillant modifié ;
- et la transmission (E250), à destination de l'agent autonome, d'une récompense r(t+1)) représentative d'une probabilité que le logiciel malveillant modifié par application de l'action sélectionnée (a(t)) soit considéré comme étant bénin par le logiciel anti-logiciel malveillant, la récompense étant définie telle que :

$$r(t+1) = \begin{cases} R \subset \mathbb{R}^+ \ \ si \ p(t+1) < T \\ p(t+1) - p(t) \ \ sinon \end{cases}$$

avec R une valeur réelle positive, T une valeur seuil propre au logiciel anti-logiciel malveillant, p(t+1)) un score de détectabilité représentatif d'une probabilité que le logiciel malveillant modifié par application de l'action sélectionnée (a(t)) soit considéré comme étant malveillant par le logiciel anti-logiciel malveillant, et p(t) le score de détectabilité par application d'une action sélectionnée à la précédente itération.

Dans des modes particuliers de mise en œuvre, le procédé d'évaluation de la détectabilité comprend en outre la détermination d'au moins une partie du contenu dont la modification n'impacte pas de fonctionnalité du logiciel malveillant ; et la modification comprend la modification de ladite au moins une partie.

Dans des modes particuliers de mise en œuvre, le procédé d'évaluation de la détectabilité comprend en outre la génération d'une association entre l'action (a(t)), et soit le score (p(t+1)), soit la récompense (r(t+1)) dans une table d'association.

Dans des modes particuliers de mise en œuvre, le logiciel anti-logiciel malveillant est un antivirus générant un score de détectabilité binaire.

Dans des modes particuliers de mise en œuvre, le logiciel malveillant est conforme au format « exécution portable » PE.

Selon un troisième aspect, l'invention concerne un procédé d'entraînement d'un logiciel anti-logiciel malveillant mettant en œuvre un algorithme d'apprentissage, le procédé comprenant :

- l'obtention d'une pluralité de logiciels malveillants modifiés conformément à un procédé d'évaluation de la détectabilité d'un logiciel malveillant par un environnement mettant en œuvre au moins un logiciel anti-logiciel malveillant selon la revendication 7, chaque logiciel malveillant de la pluralité ayant un score de détectabilité (p(t+1)) représentatif d'une probabilité que le logiciel malveillant modifié soit considéré comme étant malveillant par le logiciel anti-logiciel malveillant, le score de chaque logiciel malveillant de la pluralité étant inférieur à une valeur définie ;
- l'étiquetage desdits logiciels malveillants comme étant malveillants ; et,
- l'entraînement du logiciel anti-logiciel malveillant avec les logiciels malveillants étiquetés.

Ainsi, l'invention offre l'avantage de permettre d'entrainer un anti-logiciel malveillant mettant en œuvre un algorithme d'apprentissage avec des logiciels malveillants mais non considérés comme tels, et ce de sorte à permettre audit anti-logiciel malveillant d'améliorer la détection de comportements malveillants.

Selon un quatrième aspect, l'invention concerne un programme d'ordinateur comportant des instructions pour la mise en œuvre d'un procédé d'entrainement d'un agent autonome ou d'un procédé d'évaluation ou d'un procédé d'entraînement d'un logiciel anti-logiciel malveillant selon l'invention, lorsque ledit programme est exécuté par un processeur.

Selon un cinquième aspect, l'invention concerne un support d'enregistrement lisible par un ordinateur sur lequel est enregistré le programme d'ordinateur selon l'invention.

Selon un sixième aspect, l'invention concerne un agent autonome mettant en œuvre un algorithme d'apprentissage par renforcement pour améliorer la performance d'un logiciel anti-logiciel malveillant, l'agent mettant également en œuvre un procédé d'entraînement tel que défini ci-dessus.

Selon un septième aspect, l'invention concerne un environnement pour évaluer la détectabilité d'un logiciel malveillant par un logiciel anti-logiciel malveillant, l'environnement mettant en œuvre le procédé d'évaluation tel que défini ci-dessus.

**Brève description des dessins**

D'autres caractéristiques et avantages de la présente invention ressortiront de la description faite ci-dessous, en référence aux dessins annexés qui en illustrent un exemple de réalisation dépourvu de tout caractère limitatif. Sur les figures :

[Fig.1] la [Fig.1] est une représentation fonctionnelle d'un mode particulier de réalisation d'un système d'apprentissage par renforcement tel que proposé ;

[Fig.2] la [Fig.2] représente schématiquement un mode particulier de réalisation d'un agent autonome tel que proposé ;

[Fig.3] la [Fig.3] représente schématiquement un mode particulier de réalisation d'un environnement tel que proposé ;

[Fig.4] la [Fig.4] représente schématiquement un exemple d'architecture matérielle d'un système d'apprentissage par renforcement de la [Fig.1] ;

[Fig.5A-5B] la [Fig.5A-5B] représente schématiquement un exemple d'architecture matérielle d'un dispositif mettant en œuvre un agent autonome appartement à un système d'apprentissage par renforcement de la [Fig.1] (Fig. 5A), et un exemple d'architecture matérielle d'un dispositif mettant en œuvre un environnement appartenant au système d'apprentissage par renforcement de la [Fig.1] (Fig. 5B) ;

[Fig.6] la [Fig.6] représente, sous forme d'ordinogramme, un mode particulier de mise en œuvre d'un procédé général d'apprentissage par renforcement tel que proposé mis en œuvre dans un système d'apprentissage par renforcement comprenant l'agent autonome de la [Fig.2] et l'environnement de la [Fig.3] ;

[Fig.7] la [Fig.7] représente, sous forme d'ordinogramme, un mode particulier de mise en œuvre d'un procédé d'apprentissage par renforcement tel que proposé mis en œuvre dans un système d'apprentissage par renforcement comprenant l'agent autonome de la [Fig.2] et l'environnement de la [Fig.3] ; et,

[Fig.8] la [Fig.8] représente, sous forme d'ordinogramme, un mode particulier de mise en œuvre d'un procédé d'entraînement d'un anti-logiciel malveillant mettant en œuvre un algorithme d'apprentissage.

## Description des modes de réalisation

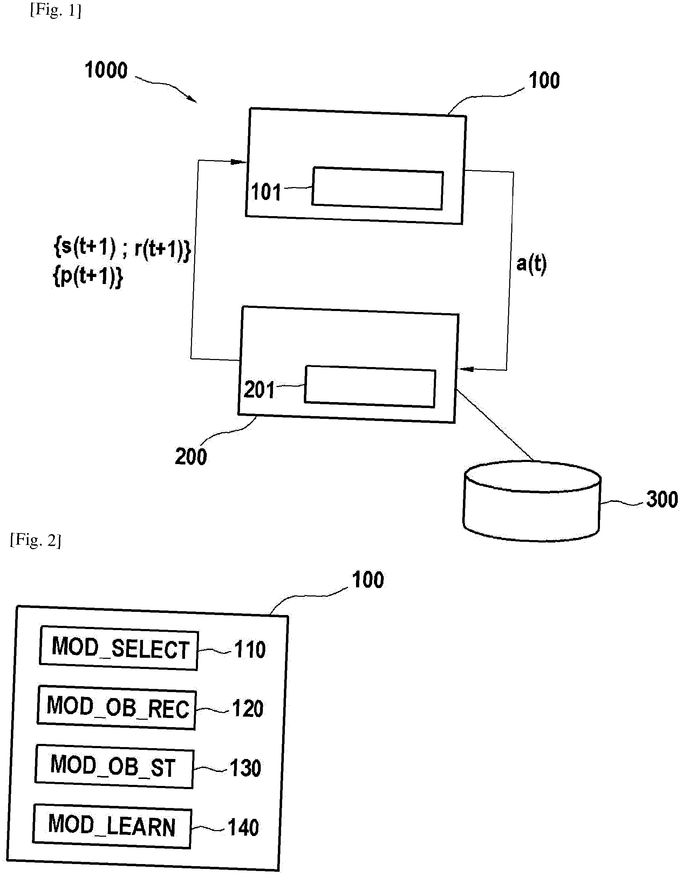

La [Fig.1] est une représentation fonctionnelle d'un mode particulier de réalisation d'un système d'apprentissage par renforcement tel que proposé.

Dans la présente description, les attaques pouvant être mises en œuvre par un logiciel malveillant sont des attaques de type informatique. De manière connue, la notion d'attaque informatique regroupe tout comportement visant à nuire à un ou plusieurs équipements informatiques (machines) déployés dans un réseau de communication, par exemple pour cibler un utilisateur d'un équipement déterminé, voire le réseau de communication lui-même pour en altérer le fonctionnement.

Aussi, dans le cadre de la présente invention, aucune limitation n'est attachée aux attaques pouvant être envisagées par les logiciels malveillants. Par exemple, il peut s'agir d'une attaque par virus (infection) ; d'un contournement malveillant de moyens de sécurité comme par exemple un pare-feu (« firewall » dans la littérature anglo-saxonne) ; d'une attaque par déni de service DoS (acronyme de l'expression anglo-saxonne « Denial of Service Attack ») ; etc.

De manière conventionnelle, l'apprentissage par renforcement consiste, pour un agent autonome, à apprendre la meilleure action ou la meilleure séquence d'actions à réaliser à partir d'expériences. Par agent autonome, on entend un agent logiciel, c'est-à-dire un programme informatique qui accomplit des tâches à la manière d'un automate. Plus précisément, l'agent autonome observe un environnement, et décide d'une action ou d'une séquence d'actions à réaliser sur cet environnement en fonction de son état courant. Un état correspond à une représentation de l'environnement que ledit agent reçoit de cet environnement, par exemple après qu'une action soit réalisée sur cet environnement. En retour, l'environnement fournit à l'agent une récompense, qui peut être positive si l'action réalisée a eu un impact positif sur l'environnement, négative et qui correspond alors à une pénalité, ou nulle. L'environnement peut correspondre à une représentation informatique d'un environnement réel, et dans ce cas, l'environnement correspond également à un programme informatique.

Ces étapes de détermination d'une action à réaliser, de transition vers un nouvel état courant, et de réception d'une récompense par l'agent sont réitérées tant qu'un critère d'arrêt n'est pas atteint, et permettent à l'agent d'apprendre ou de déterminer un comportement optimal, aussi appelé « stratégie » ou « politique » $\pi$, en ce sens qu'il maximise un gain $R(\tau)$ correspondant à une somme des récompenses reçues au cours du temps.

Une politique $\pi$ est une fonction qui met en correspondance un état donné avec des actions pouvant être réalisées. La méthode d'apprentissage par renforcement permet alors d'apprendre la meilleure action ou la meilleure séquence d'actions à réaliser lorsque l'environnement est dans un état donné.

Un modèle d'apprentissage par renforcement est formalisé de la manière suivante : soit $S$ un ensemble d'états, $A$ un ensemble d'actions, et $R$ un ensemble de récompenses. A chaque itération, l'agent perçoit l'état $s(t) \subset S$ de l'environnement, et détermine, sur la base de cet état, une action $a(t) \subset A$ à réaliser. L'environnement passe alors dans un nouvel état l'état $s(t+1)$ c $S$ et génère une récompense $r(t+1)$ c $R$ pour l'action $a(t)$ réalisée à partir de l'état $s(t)$.

La figure 1 illustre un système d'apprentissage par renforcement 1000 tel que proposé comprenant un agent autonome 100 et un environnement (ou plateforme) 200. L'agent autonome 100 est configuré pour sélectionner une action $a(t)$ visant à modifier le contenu d'un logiciel malveillant, puis transmettre, à destination de l'environnement 200, une instruction à réaliser et comprenant l'action $a(t)$ préalablement sélectionnée.

En réponse à la réception de l'action, l'environnement 200 sélectionne un logiciel malveillant parmi un ensemble de logiciels malveillants stockés dans une base de données 300 de logiciels malveillants, et modifie conformément à ladite action ($a(t)$) le contenu d'un logiciel malveillant sélectionné, de sorte à obtenir un logiciel malveillant modifié. L'environnement 200 comprend un anti-logiciel malveillant 201, par exemple un logiciel antivirus conventionnel ou un logiciel de détection de virus utilisant des mécanismes d'apprentissage automatique. Le logiciel malveillant modifié est analysé par l'anti-logiciel malveillant 201, et l'environnement transmet en retour à l'agent autonome 100 une récompense $r(t+1)$ représentative d'une probabilité que le logiciel malveillant modifié par application de l'action sélectionnée $a(t)$ soit considéré comme étant bénin par l'anti-logiciel malveillant, ainsi qu'un état $s(t+1)$ représentatif du logiciel malveillant modifié. En variante, l'environnement transmet en retour un score de détectabilité $p(t+1) \subset [0,1]$ représentatif d'une probabilité que le logiciel soit considéré comme étant malveillant.

L'agent 100 comprend un algorithme d'apprentissage par renforcement 101 qui utilise les informations reçues pour déterminer ou mettre à jour une politique, c'est-à-dire une fonction qui, à chaque état, associe au moins une action à exécuter, de sorte à maximiser une somme des récompenses obtenues.

Selon une première alternative, l'algorithme d'apprentissage par renforcement 101 est un algorithme de « Q-learning ». Concernant cet aspect, l'homme du métier peut se référer au document "Reinforcement Learning, An introduction, Second Edition", Richard S. Sutton and Andrew G. Barto, The MIT Press, Cambridge, Massachusetts, 2018.

Cette méthode d'apprentissage permet d'apprendre l'action à réaliser pour chaque état de l'environnement, et fonctionne par l'apprentissage d'une fonction-Q de valeur état-action qui permet de déterminer la récompense $Q(s, a)$ apportée par le choix d'une certaine action $a(t)$ dans un certain état s(t) en suivant une politique optimale $\pi^*$. Lorsque cette fonction-Q de valeur d'action-état est connue après avoir été apprise par l'agent autonome 100, la politique optimale $\pi^*$ peut être construite en sélectionnant l'action qui a une valeur maximale pour un état donné, c'est-à-dire en sélectionnant l'action $a(t)$ qui maximise la valeur $Q(s, a)$ quand l'agent se trouve dans l'état $s(t)$.

Avant que l'apprentissage ne débute, la fonction-Q est initialisée arbitrairement. Ensuite, à chaque itération, l'agent observe la récompense $r(t+1)$ et le nouvel état $s(t+1)$ qui dépend de l'état précédent s(t) et de l'action $a(t)$, puis met à jour la fonction-Q de valeur de la manière suivante :

$$Q^N(s, a) = (1 - a)\, Q(s,\ a) + a\left(r(t+1) + \gamma \max_{a(t+1)} Q(s(t+1),\ a(t+1))\right)$$

avec $a \subset [0,1]$ un taux d'apprentissage, $Q(s, a)$ une précédente valeur de qualité, $r(t+1)$ une récompense, $\gamma \subset [0,1]$ un taux d'actualisation, $s(t+1)$ un état suivant et $a(t+1)$ une action pouvant être exécutée à partir de l'état $s(t+1)$.

Le taux d'apprentissage $\alpha$ est représentatif de la vitesse à laquelle l'agent abandonne la précédente valeur $Q(s,$ $a)$ pour la nouvelle valeur- $\overset{Q}{} r(t+1) + \gamma \max_{a'} Q(s',\ a')$. Autrement dit, plus le taux d'apprentissage $\alpha$ est élevé, plus l'agent adoptera rapidement la nouvelle valeur-Q.

Ainsi, grâce à cette méthode d'apprentissage, une fonction-Q est déterminée qui, à chaque état, associe une action à exécuter.

Selon une deuxième alternative, l'algorithme d'apprentissage par renforcement 101 est un algorithme de « Q-learning » profond (« deep Q-network », DQN, selon la terminologie anglo-saxonne), et la détermination de la valeur $Q^N(s, a)$ de chaque paire état-action (s, a) est mise en œuvre en utilisant un réseau de neurones profond.

Ainsi, plutôt que réaliser des itérations pour déterminer la fonction-Q optimale, un réseau de neurones profond (« deep neural network » selon la terminologie anglo-saxonne) est utilisé qui permet de déterminer les valeurs-Q de chaque paire état-action pour un environnement donné. Concernant cet aspect, l'homme du métier peut se référer au document "Human-Level Control Through Deep Reinforcement Learning" Mnih, V., Kavukcuoglu, K., Silver, D. et al., Nature 518, 529-533, 2015.

Un réseau de neurones profond est un réseau de neurones artificiel comprenant plusieurs couches cachées, et qui accepte en entrée des paramètres $\{p_1, ..., p_p\}$ de l'état $s(t)$. Ces couches déterminent les valeurs-Q $\{Q(s, a_1), ..., Q(s, a_a)\}$ pour chaque action $\{a_1, ..., a_a\}$ pouvant être réalisée à partir de cet état $s(t)$.

Selon une troisième alternative, l'algorithme d'apprentissage par renforcement 101 est un algorithme de gradient de politique, et la fonction déterminée est une fonction, qui, pour chaque état, détermine une probabilité qu'une action soit exécutée. Concernant cet aspect, l'homme du métier peut se référer au document "Reinforcement Learning, An introduction, Second Edition", Richard S. Sutton and Andrew G. Barto, Sec. 13.1, The MIT Press, Cambridge, Massachusetts, 2018.

Une méthode de gradient de politique est une méthode itérative de politique qui modélise et optimise une politique $\pi$ de manière simultanée. La politique $\pi$ est mise-à-jour pour atteindre une politique optimale $\pi^*$ qui maximise un gain $R(\tau)$. A chaque itération, cette méthode tire des expériences de manière aléatoire, en respectant une probabilité fournie par une politique, et évite ainsi à l'agent d'avoir connaissance d'un modèle représentatif de l'environnement.

Dans ce contexte, une trajectoire $\tau$ correspond à une séquence de couples {état $s(t)$, actions $a(t)$} ou de triplets {état $s(t)$, actions $a(t)$, récompenses $r$}, et le gain $R(\tau)$ correspond à une somme de récompenses $r(t+1)$ entre l'état courant $s(t)$ et un état final $s(T-1)$, et

$$R(\tau) = \sum_{t=0}^{T-1} r(t+1)$$

De manière conventionnelle, la politique $\pi$ est modélisée par une fonction objective $I(\pi_\theta)$ avec $\pi_\theta(a|s)$ une politique paramétrée, et $\theta$ des paramètres de politique. Alors,

$$J(\pi_\theta) = E_{\pi_\theta}\left[\sum_{t=0}^{T-1} r(t+1) \,\middle|\, \pi_\theta\right]$$

avec $E_{\pi_\theta}$ l'espérance mathématique, et | l'opérateur de conditionnement.

La fonction objective $J(\pi_\theta)$ permet de maximiser la valeur du gain en ajustant les paramètres de politique $\theta$, de sorte à déterminer une politique optimale. L'algorithme du gradient est un algorithme d'optimisation qui recherche de manière itérative les paramètres optimaux qui maximisent la fonction objective $J(\pi_\theta)$. Le gradient $\nabla$ de la fonction objective $J(\pi_\theta)$ s'exprime alors de la manière suivante :

$$\nabla J(\pi_\theta) = \nabla\, E_{\pi_\theta}\left[\sum_{t=0}^{T-1} r(t+1)\,\middle|\,\pi_\theta\right]$$

$$\nabla J(\pi_\theta) = E_{\pi_\theta}\left[\sum_{t=0}^{T-1} \nabla_\theta \log\pi_\theta(a(t)\mid s(t))R(\tau)\right]$$

avec $\nabla_\theta$ la dérivée par rapport à $\theta$ de la fonction $\log\pi_\theta$

Ainsi, grâce à cette méthode d'apprentissage, une fonction est déterminée qui, à chaque état, associe une séquence d'actions à exécuter.

REINFORCE est un exemple d'algorithme de méthode de gradient de politique utilisant le principe de l'échantillonnage de Monte-Carlo. Concernant cet aspect, l'homme du métier peut se référer aux documents "Reinforcement Learning, An introduction, Second Edition", Richard S. Sutton and Andrew G. Barto, Sec. 13.3 et 13.4, The MIT Press, Cambridge, Massachusetts, 2018 ou "Simple statistical gradientfollowing algorithms for connectionist reinforcement learning", Williams, R.J., Mach Learn 8, pp 229-256, 1992.

Selon une quatrième alternative, l'algorithme d'apprentissage par renforcement 101 est un algorithme Actor-Critic.

Comme mentionné ci-avant, l'environnement 200 comprend un anti-logiciel malveillant 201, par exemple un logiciel antivirus conventionnel ou un logiciel de détection de virus utilisant des mécanismes d'apprentissage automatique. Cet anti-logiciel malveillant 201 est configuré pour analyser un fichier et, en retour, calculer un score de détectabilité $p(t+1) \subset [0,1]$ représentatif d'une probabilité que le fichier soit considéré comme étant malveillant. Plus le score est élevé, plus la probabilité est forte que le fichier analysé soit malveillant.

Selon certains modes de réalisation, l'environnement 200 est configuré pour :

- obtenir des actions $a(t)$ visant à modifier le contenu d'un logiciel malveillant ;
- obtenir un logiciel malveillant ;
- réaliser des modifications sur le contenu du logiciel malveillant obtenu conformément auxdites actions ;
- et, en réponse à une analyse de l'anti-logiciel malveillant 201, retourner à l'agent autonome le score de détectabilité et/ou une récompense représentative d'une probabilité que le logiciel malveillant modifié par application de l'action sélectionnée $a(t)$ soit considéré comme étant bénin par l'anti-logiciel malveillant, voire un état $s(t+1)$ comprenant ledit logiciel malveillant modifié.

Selon une première alternative, l'anti-logiciel malveillant est un logiciel de détection de virus utilisant des mécanismes d'apprentissage automatique. Les modèles Ember décrit dans le document "EMBER: An Open Dataset for Training Static PE Malware Machine Learning Models", H. Anderson & Al., ArXiv, 2018 ; Malconv décrit dans le document "Malware Detection by Eating a Whole EXE", E. Raff & Al., ArXiv, 2017 ; et Grayscale décrit dans le document "Malware Analysis with Artificial Intelligence and a Particular Attention on Results Interpretability", B. Marais & Al., ArXiv, 2021, sont des exemples d'anti-logiciels malveillants utilisant des mécanismes d'apprentissage automatique.

Ces anti-logiciels malveillants retournent un score $p(t+1)$ où $p(t+1)$ est un nombre réel R de l'ensemble [0,1]. Sur la base de ce score $p(t+1)$, l'environnement 200 détermine une récompense qui est par exemple définie de la manière suivante :

$$r(t) = \begin{cases} R \subset \mathrm{R}^+ & si \ p(\mathrm{t}) < T \\ p(t) - p(t-1) & sinon \end{cases}$$

avec R une valeur réelle positive, et T une valeur seuil propre au logiciel de détection de virus utilisant des mécanismes d'apprentissage automatique.

Ainsi, lorsque Ember est utilisé T prend par exemple pour valeur 0.8336, et lorsque Malconv ou Grayscale sont utilisés, T prend par exemple pour valeur 0.5.

Selon une deuxième alternative, l'anti-logiciel malveillant est un logiciel de détection de virus conventionnel, tel que McAfee (marque déposée), qui retourne un score $p(t+1)$ égal à 0 ou 1. Sur la base de ce score binaire, l'environnement 200 détermine une récompense qui est par exemple définie de la manière suivante :

$$r(t) = \begin{cases} R \subset \mathrm{R}^+ & si \ p(t+1) = 0 \\ 0 & sinon \end{cases}$$

La [Fig.2] représente schématiquement un mode particulier de réalisation d'un agent autonome 100 tel que proposé.

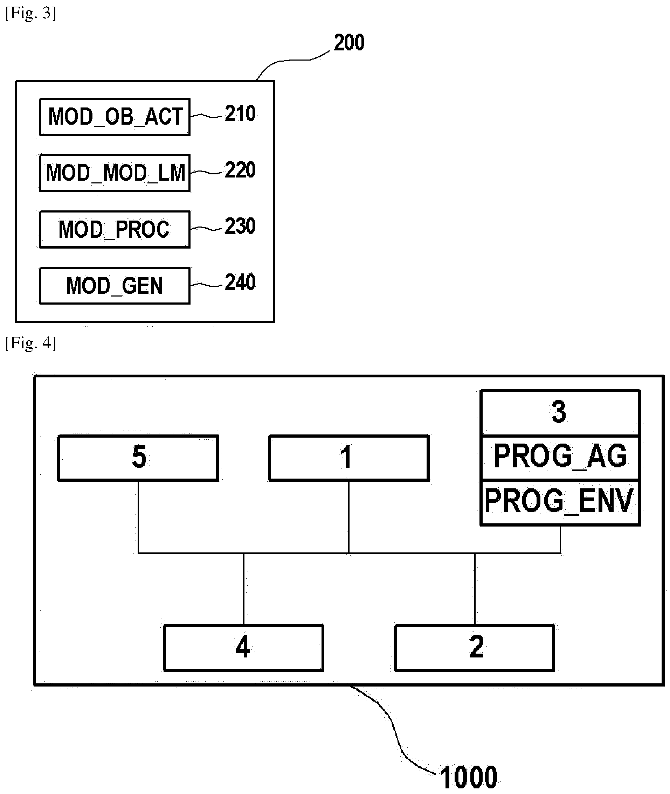

La [Fig.3] représente schématiquement un mode particulier de réalisation d'un environnement 200 tel que proposé.

La [Fig.4] représente schématiquement un exemple d'architecture matérielle d'un système d'apprentissage par renforcement de la [Fig.1].

Tel qu'illustré par la [Fig.4], le système d'apprentissage par renforcement dispose de l'architecture matérielle d'un ordinateur. Ainsi, le système comporte, notamment, un processeur 1, une mémoire vive 2, une mémoire morte 3 et une mémoire non volatile 4. Il comporte en outre un module de communication 5.

La mémoire morte 3 du système constitue un support d'enregistrement tel que proposé, lisible par le processeur 1 et sur lequel est enregistré un programme d'ordinateur PROG_AG conforme à l'invention, comportant des instructions pour l'exécution d'étapes du procédé d'entraînement tel que proposé. Le programme PROG_ AG définit des modules fonctionnels de l'agent 100 tels que représentés à la [Fig.2], qui s'appuient ou commandent les éléments matériels 1 à 5 du système cités précédemment, et qui comprennent notamment :

- un module 110 de sélection d'une action *(a(t))* visant à modifier le contenu d'un logiciel malveillant ;
- un module 120 d'obtention d'une récompense ($r(t+1)$) représentative d'une probabilité que le logiciel malveillant modifié par application de l'action sélectionnée (*a*(*t*)) soit considéré comme étant bénin par un anti-logiciel malveillant ;
- un module 130 d'obtention d'un état ($s(t+1)$) représentatif du logiciel malveillant modifié par application de l'action sélectionnée (*a*(*t*)) ; et,
- un module 140 de détermination d'une fonction qui, à chaque état, associe au moins une action à exécuter, de sorte à maximiser une somme de récompenses obtenues.

Il convient de noter que le module 140 de détermination d'une fonction est par un exemple un module de l'algorithme d'apprentissage par renforcement chargé « d'apprendre ».

Par ailleurs, l'agent peut encore comporter d'autres modules, notamment pour mettre en œuvre des modes particuliers du procédé de détermination et comme cela est décrit plus en détail ultérieurement.

Un programme d'ordinateur PROG_ENV tel que proposé, comportant des instructions pour l'exécution d'étapes du procédé d'évaluation tel que proposé est également enregistré sur la mémoire morte 3 du système. Le programme PROG_ ENV définit des modules fonctionnels de l'environnement 200 tels que représentés à la [Fig.3], qui s'appuient ou commandent les éléments matériels 1 à 5 du système cités précédemment, et qui comprennent notamment :

- un module 210 d'obtention d'une action *(a(t))* visant à modifier le contenu d'un logiciel malveillant ;
- un module 220 de modification du contenu d'un logiciel malveillant conformément à ladite action (*a(t)*), de sorte à obtenir un logiciel malveillant modifié ;
- un module 230 d'analyse, par l'anti-logiciel malveillant, du logiciel malveillant modifié ; et
- un module 240 de génération soit d'une récompense (*r*(*t* + 1)) représentative d'une probabilité que le logiciel malveillant modifié par application de l'action sélectionnée ( *a*(*t*)) soit considéré comme étant bénin par l'anti-logiciel malveillant, soit d'un score de détectabilité (*p*(*t* + 1)) représentatif d'une probabilité que le logiciel malveillant modifié par application de l'action sélectionnée *(a(t))* soit considéré comme étant malveillant par l'anti-logiciel malveillant.

Le module de communication 5 permet notamment à l'environnement 200 de communiquer, via un réseau de communication, avec la base de données 300 de logiciels malveillants, pour obtenir un logiciel malveillant sur lequel une action doit être réalisée. Pour ce faire, le module de communication 5 comporte une interface de communication, filaire ou non filaire, apte à mettre en œuvre tout protocole supporté par le réseau de communication. De cette manière, une fois en possession dudit logiciel malveillant, l'environnement 200 est en mesure de mettre en œuvre le procédé d'évaluation tel que proposé.

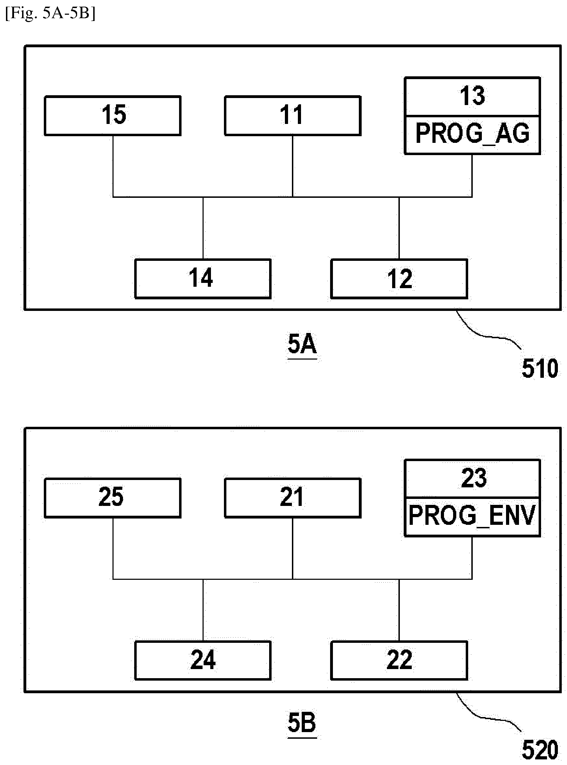

La [Fig.5A-5B] comprend la figure 5a qui représente schématiquement un exemple d'architecture matérielle d'un dispositif 510 mettant en œuvre un agent autonome 100 appartenant à un système d'apprentissage par renforcement de la [Fig.1], et la figure 5b qui représente schématiquement un exemple d'architecture matérielle d'un dispositif 520 mettant en œuvre un environnement 200 appartement au système d'apprentissage par renforcement de la [Fig.1].

Tel qu'illustré par la figure 5a, le dispositif 510 dispose de l'architecture matérielle d'un ordinateur. Ainsi, le dispositif 510 comporte, notamment, un processeur 11, une mémoire vive 12, une mémoire morte 13 et une mémoire non volatile 14. Il comporte en outre un module de communication 15. La mémoire morte 13 du dispositif constitue un support d'enregistrement conforme à l'invention, lisible par le processeur 11 et sur lequel est enregistré le programme d'ordinateur PROG_AG précédemment décrit.

Le module de communication 15 permet notamment au dispositif 510 de communiquer, via un réseau de communication, avec le dispositif 520, pour lui transmettre une action a(t) à réaliser par l'environnement et visant à modifier le contenu d'un logiciel malveillant, mais également pour recevoir de l'environnement une récompense (r(t+1)) et/ou un score de détectabilité (p(t+1)).

Tel qu'illustré par la figure 5b, le dispositif 520 dispose également de l'architecture matérielle d'un ordinateur. Ainsi, le dispositif 520 comporte, notamment, un processeur 21, une mémoire vive 22, une mémoire morte 23 et une mémoire non volatile 24. Il comporte en outre un module de communication 25. La mémoire morte 23 du dispositif constitue un support d'enregistrement conforme à l'invention, lisible par le processeur 21 et sur lequel est enregistré le programme d'ordinateur PROG_ENV précédemment décrit.

Le module de communication 25 permet notamment au dispositif 520 de communiquer, via un réseau de communication, avec le dispositif 510, pour recevoir dudit dispositif 510 une action a(t) visant à modifier le contenu d'un logiciel malveillant, mais également pour transmettre audit dispositif 510 une récompense (r(t+1)) et/ou un score de détectabilité (p(t+1)).

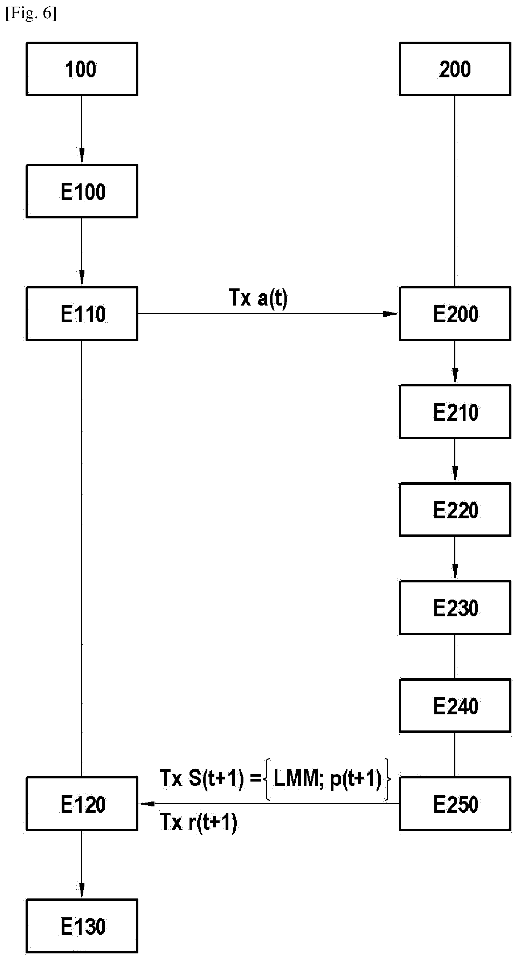

La [Fig.6] représente, sous forme d'ordinogramme, un mode particulier de mise en œuvre d'un procédé général d'apprentissage par renforcement tel que proposé et tel qu'il est mis en œuvre par l'agent autonome de la [Fig.2] et l'environnement de la [Fig.3]. Ce procédé général d'apprentissage comprend un procédé d'entraînement composé des étapes E100 à E120 et mis en œuvre par l'agent autonome 100, ainsi qu'un procédé d'évaluation composé des étapes E200 à E250 et mis en œuvre par l'environnement 200.

Tel qu'illustré par la figure 6, le procédé général d'apprentissage comprend une première étape E100 mise en œuvre par l'agent autonome 100. Pour un certain état courant *s(t),* une action *a*(*t*) à réaliser est sélectionnée parmi un ensemble d'au moins une action (mais possiblement comprenant une pluralité d'actions) pouvant être réalisée pour cet état *s(t).* Ladite étape E100 est mise en œuvre par le module de sélection 110 équipant l'agent autonome 100.

Si l'agent autonome 100 n'a pas de connaissance sur l'environnement, ledit agent 100 explore son environnement en testant une pluralité d'actions pour une pluralité d'états, afin d'apprendre les possibilités les plus favorables, et ainsi déterminer la politique qui maximise une somme de récompenses reçues. En revanche, pour maximiser la somme de récompenses reçues, l'agent doit également exploiter les connaissances acquises.

Par conséquent, selon certains modes de réalisation, pour obtenir un équilibre entre l'exploitation et l'exploration, une stratégie dite « Epsilon Greedy » est mise en œuvre pour sélectionner l'action à réaliser.

Les actions pouvant être réalisées visent à modifier le contenu d'un logiciel malveillant, mais ne doivent pas impacter les fonctionnalités malveillantes dudit logiciel malveillant. Ainsi, si le logiciel malveillant a par exemple pour fonctionnalités malveillantes le chiffrement de la mémoire d'un premier équipement et la suppression du contenu de cette mémoire après une durée prédéterminée, la modification du contenu dudit logiciel malveillant ne doit pas avoir d'impact sur ces deux fonctionnalités malveillantes.

Les actions qui visent à modifier le contenu d'un logiciel malveillant sont par exemple les suivantes :

- la modification de la valeur du champ d'un entête du logiciel malveillant. En particulier, lorsque le format de fichiers du logiciel malveillant est de type « exécutable portable » (ou Portable Executable (PE) selon la terminologie anglo-saxonne), la modification de la valeur du champ d'un entête peut correspondre à la modification d'une valeur du champ « Machine Type » de l'entête COFF.
- l'ajout d'une séquence de caractères extraite d'un fichier bénin au contenu du logiciel malveillant. Certains anti-logiciels malveillants considèrent qu'un fichier peut être considéré comme ayant un comportement bénin lorsqu'il comprend certaines séquences de caractères communément utilisées dans des fichiers bénins. Ces séquences de caractères peuvent être déterminées lors d'un traitement préalable, par analyse statistique de contenus de fichiers bénins.
- l'ajout de caractères ou d'instructions déterminés au contenu du logiciel malveillant. On parle alors parfois de « rembourrage ». Il peut par exemple s'agir de l'ajout d'une séquence de zéros ou de l'ajout d'une instruction indiquant au processeur de ne rien faire lorsqu'il doit traiter cette instruction.
- l'ajout d'une librairie extraite d'un fichier bénin au contenu du logiciel malveillant. Certains anti-logiciels malveillants considèrent qu'un fichier peut être considéré comme ayant un comportement bénin lorsqu'il comprend certaines librairies communément utilisées dans des fichiers bénins. Ces librairies peuvent être déterminées lors d'un traitement préalable, par analyse statistique de contenus de fichiers bénins.
- le renommage d'une section du contenu du logiciel malveillant. Lorsque le format de fichier du logiciel malveillant est de type « exécutable portable », ledit logiciel malveillant comprend des sections du binaire qui doivent être chargées en mémoire, par exemple ".text", ".bss", ".data", ".upx". Cette action vise à renommer ces sections.
- la suppression d'un mode débuggeur du contenu du logiciel malveillant. Les logiciels malveillants utilisent parfois un mode débuggeur pour analyser un programme informatique, de sorte à faire de la rétro-ingénierie (« reverse engineering » selon la terminologie anglo-saxonne) et ainsi déterminer des failles ou concevoir des exploits. Puisque certains anti-logiciels malveillants utilisent des codes détecteurs de débuggeur, la suppression d'un tel mode permet avantageusement de renforcer la difficulté à détecter un logiciel malveillant.
- la modification d'une estampille temporelle du contenu du logiciel malveillant ;
- la modification d'une valeur de hachage calculée pour un entête optionnel du contenu du logiciel malveillant ; et,
- la décompression d'une version exécutable du logiciel malveillant. Certains anti-logiciels malveillants qualifient un fichier exécutable de malveillant dès qu'il est chiffré. C'est pour cela que la décompression permet avantageusement de renforcer la difficulté à détecter un logiciel malveillant.

L'action sélectionnée $a(t)$ est transmise à l'environnement 200 lors d'une étape E110, qui reçoit cette action lors d'une étape E200. Lors d'une étape E210, l'environnement 200 obtient un logiciel malveillant, par exemple en accédant à une base de données 300 de logiciels malveillants. Ladite étape E210 est mise en œuvre par le module d'obtention 210 d'une action équipant l'environnement 200.

Lors d'une étape E220, l'environnement 200 modifie le contenu du logiciel malveillant conformément à l'action reçue lors de l'étape E200. Ladite étape E220 est mise en œuvre par le module 220 de modification d'un contenu équipant l'environnement 200. Selon certains modes de réalisation, l'environnement 200 réalise une analyse syntaxique du contenu du logiciel malveillant, et détermine une partie du contenu dont la modification n'impacte pas de fonctionnalité malveillante du logiciel malveillant. Dans ce cas, l'étape E220 comprend la modification de ladite partie.

Puis lors d'une étape E230, le logiciel malveillant modifié est analysé par un anti-logiciel malveillant de l'environnement 200 qui génère un score de détectabilité $p(t + 1)$ représentatif d'une probabilité que le logiciel malveillant modifié par application de l'action sélectionnée $a(t)$ soit considéré comme étant malveillant par l'anti-logiciel malveillant. Plus le score est élevé, plus la probabilité est forte que le fichier analysé soit malveillant. Ladite étape E230 est mise en œuvre par le module 230 d'analyse équipant l'environnement 200.

Lors d'une étape E240, l'environnement détermine une récompense représentative d'une probabilité que le logiciel malveillant modifié par application de l'action sélectionnée $a(t)$ soit considéré comme étant bénin par l'anti-logiciel malveillant. Comme mentionnée ci-avant, cette récompense est calculée en fonction de la valeur du score généré lors de l'étape E230. Ladite étape E240 est mise en œuvre par le module 240 de génération équipant l'environnement 200.

Lors d'une étape E250, l'environnement transmet la récompense $r(t+ 1)$ déterminée lors de l'étape E240, ainsi qu'un état $s(t + 1)$ comprenant le logiciel malveillant modifié conformément à l'action $a(t)$, l'état comprenant en outre la valeur du score de détectabilité $p(t + 1)$ déterminé lors de l'étape E230.

Ces informations sont reçues par l'agent autonome 100 lors d'une étape E120, et lui permettent de déterminer, lors d'une étape E130, une fonction qui, à chaque état, associe une action ou une séquence d'actions à exécuter, de sorte à maximiser une somme des récompenses obtenues. Ladite étape E130 est mise en œuvre par le module 140 de détermination équipant l'agent 100.

Comme décrit ci-avant, lorsque l'algorithme d'apprentissage par renforcement mis en œuvre par l'agent autonome 100 est un algorithme de « Q-learning », pour un état courant $s(t)$, la détermination comprend la mise à jour d'une valeur-Q pour les pairs état $s(t)$ - actions qui dépend de la valeur de récompense $r(t + 1)$ reçue à l'itération courante. Et lorsque l'algorithme d'apprentissage par renforcement mis en œuvre par l'agent autonome 100 est un algorithme de gradient de politique, la détermination comprend la mise-à-jour d'une probabilité qu'une action $a(t)$ soit pertinente pour complexifier la détection d'un logiciel malveillant, compte tenu de l'état courant $s(t)$.

Les étapes de sélection, l'obtention d'une récompense et l'obtention d'un état sont itérées tant qu'un critère d'arrêt n'est pas atteint. L'évaluation de ce critère est réalisée par un module d'évaluation (non représenté) équipant l'agent 100, par exemple après la détermination ou la mise à jour de la fonction qui, à chaque état, associe une action ou une séquence d'actions à exécuter. Ainsi et selon un premier exemple, le critère d'arrêt consiste à comparer une somme de récompenses reçues avec une valeur déterminée. Selon un deuxième exemple, le critère d'arrêt consiste à comparer l'indice de l'itération courante avec un nombre maximal d'itérations.

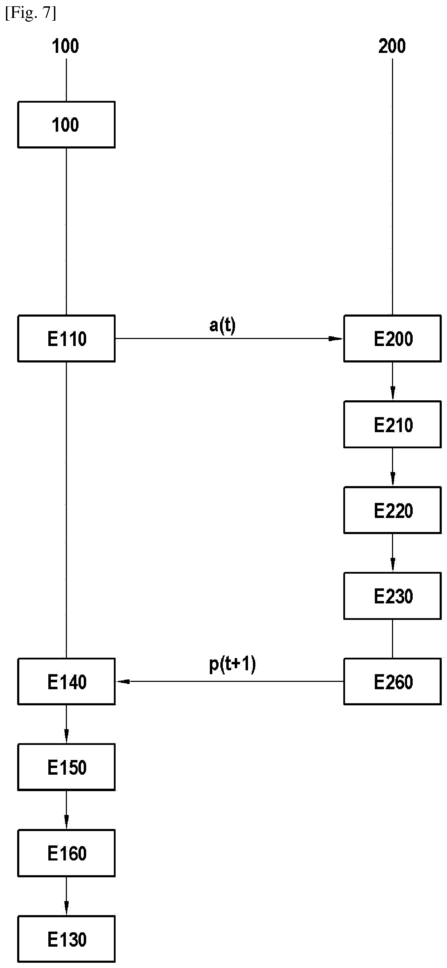

La [Fig.7] représente, sous forme d'ordinogramme, un mode particulier de mise en œuvre d'un procédé général d'apprentissage par renforcement tel que proposé et tel qu'il est mis en œuvre par l'agent autonome de la [Fig.2] et l'environnement de la [Fig.3]. Ce procédé général d'apprentissage comprend un procédé d'entraînement composé des étapes E100, E110, E140, E150, E160, E130 et mis en œuvre par l'agent autonome 100, ainsi qu'un procédé d'évaluation composé des étapes E200, E210, E220, E230, E260 et mis en œuvre par l'environnement 200.

La [Fig.7] est une variante du mode de réalisation illustré par la [Fig.6]. Les éléments communs à ces deux modes de réalisation distincts portent les mêmes numéros de références et présentent des caractéristiques identiques de sorte qu'ils ne sont pas à nouveau décrits par souci de simplicité.

Tel qu'illustré par la figure 7, le procédé général d'apprentissage comprend une première étape E100 de sélection d'une action $a(t)$ parmi un ensemble d'au moins une action, mise en œuvre par l'agent autonome 100.

L'action sélectionnée $a(t)$ est transmise à l'environnement 200 lors d'une étape E110, qui reçoit cette action lors d'une étape E200. Lors d'une étape E210, l'environnement 200 obtient un logiciel malveillant, par exemple en accédant à une base de données 300 de logiciels malveillants.

Puis lors d'une étape E220, l'environnement 200 modifie le contenu du logiciel malveillant conformément à l'action reçue lors de l'étape E200. Lors d'une étape E230, le logiciel malveillant modifié est analysé par un anti-logiciel malveillant de l'environnement 200 qui génère un score de détectabilité $p(t + 1)$ représentatif d'une probabilité que le logiciel malveillant modifié par application de l'action sélectionnée $a(t)$ soit considéré comme étant malveillant par l'anti-logiciel malveillant.

Lors d'une étape E260, l'environnement transmet à l'agent autonome 100 le score $p(t + 1)$ déterminé lors de l'étape E230, qui est reçu lors d'une étape E140.

Puis lors d'une étape E150, l'agent autonome 100 détermine un état correspondant à un logiciel malveillant dont le contenu a été modifié par application d'une action $a(t)$. Pour cela, l'agent 100 obtient le logiciel malveillant avant qu'il ne soit modifié, par exemple en accédant une base de données 300 de logiciels malveillants, et détermine une version modifiée en appliquant l'action qu'il a sélectionnée lors de l'étape E100.

Lors d'une étape E160, l'agent autonome 100 détermine une récompense $r(t + 1)$ en fonction du score $p(t + 1)$ reçu lors de l'étape E140. Enfin, lors d'une étape E130, une fonction est déterminée qui, à chaque état, associe une action à exécuter, de sorte à maximiser une somme des récompenses obtenues.

Dans certains modes de réalisation, le procédé général d'apprentissage tel que proposé comprend en outre la génération d'une association entre l'action (a(t)), et soit le score (p(t+1)), soit la récompense (r(t+1)) dans une table d'association. Cette table d'association peut ensuite être transmise aux auteurs d'anti-logiciels. Ces informations s'avèrent cruciales pour eux puisqu'elles leur permettent d'améliorer les performances de leurs solutions en termes de détection de logiciels malveillants.

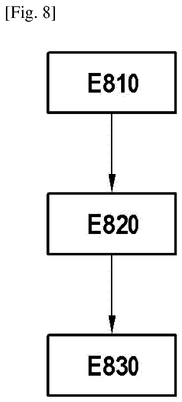

La [Fig.8] représente, sous forme d'ordinogramme, un mode particulier de mise en œuvre d'un procédé d'entraînement d'un anti-logiciel malveillant mettant en œuvre un algorithme d'apprentissage.

Tel qu'illustré par la [Fig.8], le procédé d'entraînement d'un anti-logiciel malveillant comprend une première étape E810 d'obtention d'une pluralité de logiciels malveillants modifiés, chaque logiciel malveillant de la pluralité ayant un score représentatif d'une probabilité que le logiciel malveillant modifié soit considéré comme étant malveillant par l'anti-logiciel malveillant, le score de chaque logiciel malveillant de la pluralité étant inférieur à une valeur définie.

La pluralité de logiciels malveillants modifiés est par exemple obtenue en accédant à une base de données liée à la base de données 300, ou correspondant à ladite base de données 300.

A chaque itération du procédé général d'apprentissage par renforcement de la figure 6 ou de la figure 7, il est par exemple déterminé si le score de détectabilité $p(t + 1)$ du logiciel malveillant modifié est inférieur à une valeur définie (e.g.,

0.45) caractérisant le fait que ce logiciel malveillant modifié, avant réapprentissage (c'est-à-dire avant la mise en œuvre des étapes E810 à E830), n'est pas considéré comme ayant un comportement malveillant par l'anti-logiciel malveillant. Si tel est le cas, le logiciel malveillant modifié et ce score de détectabilité $p(t+1)$ sont enregistrés dans ladite base de données 310. En variante, le logiciel malveillant obtenu lors de l'étape E210 du procédé général, l'action a(t) sélectionnée lors de l'étape E100 et le score de détectabilité $p(t+1)$ sont enregistrés dans ladite base de données 310. Ladite étape E810 est mise en œuvre par un module d'obtention équipant l'environnement 200.

Puis lors d'une étape E820, les logiciels malveillants de la pluralité sont étiquetés comme ayant un comportement malveillant. Ladite étape E810 est par exemple mise en œuvre par un module d'étiquetage équipant l'environnement 200.

Ces données (e.g., les logiciels malveillants modifiés et leurs étiquettes) sont utilisées lors d'une étape d'entraînement E830 par l'algorithme d'apprentissage de l'anti-logiciel malveillant. Ladite étape E830 est mise en œuvre par un module d'entraînement lié à l'algorithme d'apprentissage de l'anti-logiciel malveillant. Cette étape lui permet d'améliorer ses connaissances, de sorte à lui permettre de détecter des logiciels malveillants (e.g., de déterminer après analyse que ces logiciels ont un comportement malveillant), même si des actions ont été réalisées sur le contenu dudit logiciel malveillant visant à le rendre indétectable.

L'invention a été décrite jusqu'à présent dans le cas où une somme de récompenses obtenues est maximisée, mais l'invention n'en reste pas moins applicable dans le cas particulier où le critère d'arrêt est atteint à l'issue d'une unique itération, et la somme correspond alors à une unique récompense obtenue.

**Revendications**

1. Procédé d'entraînement d'un agent autonome mettant en œuvre un algorithme d'apprentissage par renforcement pour améliorer la performance d'un logiciel anti-logiciel malveillant, le procédé étant mis en œuvre par l'agent autonome et comprenant :

   - la sélection (E100) d'une action (a(t)) visant à modifier le contenu d'un logiciel malveillant ;
   - la transmission (E110) de l'action sélectionnée à un environnement mettant en œuvre ledit logiciel anti-logiciel malveillant;
   - la réception (E120), en provenance de l'environnement, d'une récompense (r(t+1)) représentative d'une probabilité que le logiciel malveillant modifié par application de l'action sélectionnée (a(t)) soit considéré comme étant bénin par le logiciel anti-logiciel malveillant, la récompense étant définie telle que :

   $$r(t+1) = \begin{cases} R \subset \mathrm{R}^+ & si\ p(t+1) < T \\ p(t+1) - p(t) & sinon \end{cases}$$

   avec R une valeur réelle positive, T une valeur seuil propre au logiciel anti-logiciel malveillant, p(t+1) un score de détectabilité représentatif d'une probabilité que le logiciel malveillant modifié par application de l'action sélectionnée (a(t)) soit considéré comme étant malveillant par le logiciel anti-logiciel malveillant, et p(t) le score de détectabilité par application d'une action sélectionnée à la précédente itération;
   - l'obtention (E120, E150) d'un état (s(t+1)) représentatif du logiciel malveillant modifié par application de l'action sélectionnée (a(t)) ; la sélection, la réception d'une récompense et l'obtention d'un état étant itérées tant qu'un critère d'arrêt n'est pas atteint ; et,
   - la détermination (E130), par l'algorithme d'apprentissage par renforcement et en fonction des récompenses obtenues, d'une fonction qui, à chaque état, associe au moins une action à exécuter, de sorte à maximiser une somme des récompenses obtenues.

2. Procédé d'entraînement selon la revendication 1, dans lequel l'obtention d'un état (s(t+1)) comprend soit la réception, en provenance de l'environnement, de l'état (s(t+1)) ; soit l'obtention du logiciel malveillant sur lequel une action (a(t)) peut être appliquée, et la détermination de l'état (s(t+1)) en fonction de l'action sélectionnée (a(t)) et du logiciel malveillant obtenu.

3. Procédé d'entraînement selon la revendication 1 ou 2, dans lequel l'algorithme d'apprentissage par renforcement est un algorithme de « Q-learning », et la détermination de la fonction comprend une détermination, pour chaque paire état-action (s, a), d'une valeur $Q^N(s, a)$ telle que

$$Q^N(s, a) = (1 - \alpha)\, Q(s,\ a) + \alpha\left(r(t+1) + \gamma \max_{a(t+1)} Q(s(t+1),\ a(t+1))\right)$$

avec $\alpha \subset [0,1]$ un taux d'apprentissage, $Q(s, a)$ une précédente valeur de qualité, $r(t+1)$ une récompense, $\gamma$ c $[0,1]$ un taux d'actualisation, $s(t+1)$ un état suivant et $a(t+1)$ une action pouvant être exécutée à partir de l'état $s(t+1)$, de sorte à déterminer une fonction-Q optimale.

4. Procédé d'entraînement selon l'une des revendications 1 à 3, dans lequel l'action (a(t)) est sélectionnée parmi un ensemble d'actions comprenant :

- la modification de la valeur du champ d'un entête du logiciel malveillant ;
- l'ajout d'une séquence de caractères extraite d'un fichier bénin au contenu du logiciel malveillant;
- l'ajout de caractères ou d'instructions déterminés au contenu du logiciel malveillant;
- l'ajout d'une librairie extraite d'un fichier bénin au contenu du logiciel malveillant;
- le renommage d'une section du contenu du logiciel malveillant ;
- la suppression d'un mode débuggeur du contenu du logiciel malveillant ;
- la modification d'une estampille temporelle du contenu du logiciel malveillant ;
- la modification d'une valeur de hachage calculée pour un entête optionnel du contenu du logiciel malveillant ; et,
- la décompression d'une version exécutable du logiciel malveillant.

5. Programme d'ordinateur comportant des instructions pour la mise en œuvre d'un procédé d'entraînement selon l'une quelconque des revendications 1 à 4, lorsque ledit programme est exécuté par un ordinateur.

6. Support d'enregistrement lisible par un ordinateur sur lequel est enregistré un programme d'ordinateur selon la revendication 5.

7. Procédé d'évaluation de la détectabilité d'un logiciel malveillant par un environnement mettant en œuvre au moins un logiciel anti-logiciel malveillant, le procédé comprenant :

- la réception (E200), en provenance d'un agent autonome mettant en œuvre un algorithme d'apprentissage par renforcement, d'une action (a(t)) visant à modifier le contenu du logiciel malveillant ;
- la modification (E220) du contenu du logiciel malveillant par application de ladite action (a(t)), de sorte à obtenir un logiciel malveillant modifié ;
- l'analyse (E230), par le logiciel anti-logiciel malveillant, du logiciel malveillant modifié ;
- et la transmission (E250), à destination de l'agent autonome, d'une récompense r(t+1)) représentative d'une probabilité que le logiciel malveillant modifié par application de l'action sélectionnée (a(t)) soit considéré comme étant bénin par le logiciel anti-logiciel malveillant, la récompense étant définie telle que :

$$r(t+1) = \begin{cases} R \subset \mathrm{R}^+ & si\ p(t+1) < T \\ p(t+1) - p(t) & sinon \end{cases}$$

avec R une valeur réelle positive, T une valeur seuil propre au logiciel anti-logiciel malveillant, p(t+1)) un score de détectabilité représentatif d'une probabilité que le logiciel malveillant modifié par application de l'action sélectionnée (a(t)) soit considéré comme étant malveillant par le logiciel anti-logiciel malveillant, et p(t) le score de détectabilité par application d'une action sélectionnée à la précédente itération.

8. Procédé d'évaluation selon la revendication 7, comprenant en outre la génération d'une association entre l'action (a(t)), et soit le score p(t+1), soit la récompense r(t+1) dans une table d'association.

9. Programme d'ordinateur comportant des instructions pour la mise en œuvre d'un procédé d'évaluation selon la revendication 7 ou 8, lorsque ledit programme est exécuté par un ordinateur.

10. Support d'enregistrement lisible par un ordinateur sur lequel est enregistré un programme d'ordinateur selon la revendication 9.

11. Procédé d'entraînement d'un logiciel anti-logiciel malveillant mettant en œuvre un algorithme d'apprentissage, le procédé comprenant :

- l'obtention d'une pluralité de logiciels malveillants modifiés conformément à un procédé d'évaluation de la détectabilité d'un logiciel malveillant par un environnement mettant en œuvre au moins un logiciel anti-logiciel malveillant selon la revendication 7, chaque logiciel malveillant de la pluralité ayant un score de détectabilité (p(t+1)) représentatif d'une probabilité que le logiciel malveillant modifié soit considéré comme étant malveillant par le logiciel anti-logiciel malveillant, le score de chaque logiciel malveillant de la pluralité étant inférieur à une valeur définie ;
- l'étiquetage desdits logiciels malveillants comme étant malveillants ; et,
- l'entraînement du logiciel anti-logiciel malveillant avec les logiciels malveillants étiquetés.

12. Programme d'ordinateur comportant des instructions pour la mise en œuvre d'un procédé d'entraînement selon la revendication 11, lorsque ledit programme est exécuté par un ordinateur.

13. Support d'enregistrement lisible par un ordinateur sur lequel est enregistré un programme d'ordinateur selon la revendication 12.

14. Agent autonome mettant en œuvre un algorithme d'apprentissage par renforcement pour améliorer la performance d'un logiciel anti-logiciel malveillant, l'agent mettant également en œuvre un procédé d'entraînement selon l'une quelconque des revendications 1 à 4.

15. Environnement pour évaluer la détectabilité d'un logiciel malveillant par un logiciel anti-logiciel malveillant, l'environnement mettant en œuvre le procédé d'évaluation selon la revendication 7 ou 8.


**Patentansprüche**

1. Verfahren zum Trainieren eines autonomen Agenten, der einen Algorithmus zum bestärkenden Lernen einsetzt, um die Leistung einer Anti-Malware-Software zu verbessern, wobei das Verfahren durch den autonomen Agenten eingesetzt wird und Folgendes umfasst:

- das Auswählen (E100) einer Aktion (a(t)), die darauf abzielt, den Inhalt einer Malware zu verändern;
- das Übertragen (E110) der ausgewählten Aktion an eine Umgebung, welche die Anti-Malware-Software einsetzt;
- das Empfangen (E120), von der Umgebung, einer Belohnung (r(t+1)), die repräsentativ für eine Wahrscheinlichkeit ist, dass die durch Anwenden der ausgewählten Aktion (a(t)) geänderte Malware von der Anti-Malware-Software als gutartig angesehen wird, wobei die Belohnung derart definiert ist, dass:

$$r(t+1) = \begin{cases} R \subset R^+ \text{wenn } p(t+1) < T \\ p(t+1) - p(t) \text{ sonst} \end{cases}$$

wobei R ein positiver realer Wert ist, T ein spezifischer Schwellenwert für die Anti-Malware-Software ist, p(t+1) ein Detektierbarkeitsscore ist, der repräsentativ für eine Wahrscheinlichkeit ist, dass die durch Anwenden der ausgewählten Aktion (a(t)) geänderte Malware von der Anti-Malware-Software als bösartig angesehen wird, und p(t) der Detektierbarkeitsscore durch Anwenden einer ausgewählten Aktion auf die vorhergehende Iteration ist;
- das Erhalten (E120, E150) eines Zustands (s(t+1)), der repräsentativ für die durch Anwenden der ausgewählten Aktion (a(t)) geänderte Malware ist;
wobei das Auswählen, das Empfangen einer Belohnung und das Erhalten eines Zustands iteriert werden, solange ein Stoppkriterium nicht erreicht ist; und
- das Bestimmen (E130), durch den Algorithmus zum bestärkenden Lernen und in Abhängigkeit von den erhaltenen Belohnungen, einer Funktion, die jedem Zustand mindestens eine auszuführende Aktion zuordnet, so dass eine Summe der erhaltenen Belohnungen maximiert wird.

2. Verfahren zum Trainieren nach Anspruch 1, wobei das Erhalten eines Zustands (s(t+1)) entweder das Empfangen des Zustands (s(t+1)) von der Umgebung oder das Erhalten der Malware, auf die eine Aktion (a(t)) angewendet werden kann, und das Bestimmen des Zustands (s(t+1)) in Abhängigkeit von der ausgewählten Aktion (a(t)) und von der erhaltenen Malware umfasst.

3. Verfahren zum Trainieren nach Anspruch 1 oder 2, wobei der Algorithmus zum bestärkenden Lernen ein "Q-Learning" -Algorithmus ist und das Bestimmen der Funktion ein Bestimmen, für jedes Zustand/Aktion-Paar (s, a), eines Werts $Q^N(s, a)$ umfasst, so dass

$$Q^N(s,a) = (1-\alpha)\,Q(s,\ a) + \alpha\left(r(t+1) + \gamma\max_{a(t+1)} Q(s(t+1),\ a(t+1))\right)$$

wobei $\alpha \subset [0,1]$ eine Lernrate ist, Q(s, a) ein vorhergehender Qualitätswert ist, r(t + 1) eine Belohnung ist, $\gamma \subset [0,1]$ eine Aktualisierungsrate ist, s(t + 1) ein folgender Zustand ist und a(t + 1) eine Aktion ist, die ausgehend von dem Zustand s(t + 1) ausgeführt werden kann, so dass eine optimale Q-Funktion bestimmt wird.

4. Verfahren zum Trainieren nach einem der Ansprüche 1 bis 3, wobei die Aktion (a(t)) aus einer Menge von Aktionen ausgewählt ist, die Folgendes umfasst:

- das Ändern des Werts des Feldes eines Headers der Malware;
- das Hinzufügen einer Zeichenfolge, die aus einer gutartigen Datei extrahiert wurde, zu dem Inhalt der Malware;
- das Hinzufügen von bestimmten Zeichen oder Anweisungen zu dem Inhalt der Malware;
- das Hinzufügen einer Bibliothek, die aus einer gutartigen Datei extrahiert wurde, zu dem Inhalt der Malware;
- das Umbenennen eines Abschnitts des Inhalts der Malware;
- das Löschen eines Debug-Modus aus dem Inhalt der Malware;
- das Ändern eines Zeitstempels des Inhalts der Malware;
- das Ändern eines berechneten Hash-Werts für einen optionalen Header des Inhalts der Malware; und
- das Dekomprimieren einer ausführbaren Version der Malware.

5. Computerprogramm, das Anweisungen umfasst, die bei der Ausführung des Programms durch einen Computer ein Verfahren zum Trainieren nach einem der Ansprüche 1 bis 4 ausführen.

6. Computerlesbares Speichermedium, auf dem ein Computerprogramm nach Anspruch 5 gespeichert ist.

7. Verfahren zum Bewerten der Detektierbarkeit einer Malware durch eine Umgebung, die mindestens eine Anti-Malware-Software einsetzt, wobei das Verfahren Folgendes umfasst:

- das Empfangen (E200) einer Aktion (a(t)), die darauf abzielt, den Inhalt der Malware zu ändern, von einem autonomen Agenten, der einen Algorithmus zum bestärkenden Lernen einsetzt;
- das Ändern (E220) des Inhalts der Malware durch Anwenden der Aktion (a(t)), so dass eine geänderte Malware erhalten wird;
- das Analysieren (E230) der geänderten Malware durch die Anti-Malware-Software;
- und das Übertragen (E250) einer Belohnung r(t+1)), die repräsentativ für eine Wahrscheinlichkeit ist, dass die durch Anwendung der ausgewählten Aktion (a(t)) geänderte Malware von der Anti-Malware-Software als gutartig angesehen wird, an den autonomen Agenten, wobei die Belohnung so definiert ist, dass:

$$r(t + 1) = \begin{cases} R \subset R^+ \text{wenn } p(t + 1) < T \\ p(t + 1) - p(t) \text{ sonst} \end{cases}$$

wobei R ein positiver realer Wert ist, T ein spezifischer Schwellenwert für die Anti-Malware-Software ist, p(t+1) ein Detektierbarkeitsscore ist, der repräsentativ für eine Wahrscheinlichkeit ist, dass die durch Anwenden der ausgewählten Aktion (a(t)) geänderte Malware von der Anti-Malware-Software als bösartig angesehen wird, und p(t) der Detektierbarkeitsscore durch Anwenden einer ausgewählten Aktion auf die vorhergehende Iteration ist.

8. Verfahren zum Bewerten nach Anspruch 7, umfassend ferner das Erzeugen einer Zuordnung zwischen der Aktion (a(t)) und entweder dem Score p(t+1) oder der Belohnung r(t+1) in einer Zuordnungstabelle.

9. Computerprogramm, das Anweisungen umfasst, die bei der Ausführung des Programms durch einen Computer ein Verfahren zum Bewerten nach Anspruch 7 oder 8 ausführen.

10. Computerlesbares Speichermedium, auf dem ein Computerprogramm nach Anspruch 9 gespeichert ist.

11. Verfahren zum Trainieren einer Anti-Malware-Software, das einen Lernalgorithmus einsetzt, wobei das Verfahren Folgendes umfasst:

- das Erhalten einer Vielzahl von Malware, die gemäß einem Verfahren zum Bewerten der Detektierbarkeit einer Malware durch eine Umgebung, die mindestens eine Anti-Malware-Software einsetzt, nach Anspruch 7 geändert wurden, wobei jede Malware der Vielzahl einen Detektierbarkeitsscore (p(t+1)) aufweist, der repräsentativ für eine Wahrscheinlichkeit ist, dass die geänderte Malware von der Anti-Malware-Software als bösartig angesehen wird, wobei der Score jeder Malware der Vielzahl kleiner als ein definierter Wert ist;
- das Kennzeichnen der Malware als bösartig; und
- das Trainieren der Anti-Malware-Software mit der gekennzeichneten Malware.

12. Computerprogramm, das Anweisungen umfasst, die bei der Ausführung des Programms durch einen Computer ein Verfahren zum Trainieren nach Anspruch 11 ausführen.

13. Computerlesbares Speichermedium, auf dem ein Computerprogramm nach Anspruch 12 gespeichert ist.

14. Autonomer Agent, der einen Algorithmus zum bestärkenden Lernen einsetzt, um die Leistung einer Anti-Malware-Software zu verbessern, wobei der Agent auch ein Verfahren zum Trainieren nach einem der Ansprüche 1 bis 4 einsetzt.

15. Umgebung zum Bewerten der Detektierbarkeit einer Malware durch eine Anti-Malware-Software, wobei die Umgebung das Verfahren zum Bewerten nach Anspruch 7 oder 8 einsetzt.


**Claims**

1. Method for training an autonomous agent implementing a reinforcement learning algorithm to improve the performance of anti-malware software, the method being implemented by the autonomous agent and comprising:

- selection (E100) of an action (a(t)) aimed at modifying the contents of malware;
- transmission (E110) of the selected action to an environment implementing said anti-malware software;
- receipt (E120), from the environment, of a reward (r(t+1)) representative of a probability that the malware modified by application of the selected action (a(t)) would be considered benign by the anti-malware software, the reward being defined such that:

$$r(t + 1) = \begin{cases} R \subset R^+ \text{if } p(t + 1) < T \\ p(t + 1) - p(t) \text{ otherwise} \end{cases}$$

where R is a positive real value, T is a threshold value specific to the anti-malware software, p(t+1) is a detectability score representative of a probability that the malware modified by application of the selected action (a(t)) would be considered malicious by the anti-malware software, and p(t) is the detectability score obtained with application of an action selected in the previous iteration;
- obtainment (E120, E150) of a state (s(t+1)) representative of the malware modified by application of the selected action (a(t));
the selection, receipt of a reward and obtainment of a state being iterated until a termination criterion is met; and,
- determination (E130), by the reinforcement learning algorithm and depending on the obtained rewards, of a function that, with each state, associates at least one action to be executed, so as to maximize a sum of the obtained rewards.

2. Training method according to Claim 1, wherein the obtainment of a state (s(t+1)) comprises either receipt, from the environment, of the state (s(t+1)); or obtainment of the malware to which an action (a(t)) may be applied, and determination of the state (s(t+1)) depending on the selected action (a(t)) and on the obtained malware.

3. Training method according to Claim 1 or 2, wherein the reinforcement learning algorithm is a Q-learning algorithm, and the determination of the function comprises determination, for each state-action pair (s, a), of a value $Q^N(s, a)$ such

that:

$$Q^N(s,a) = (1-\alpha)\,Q(s,\,a) + \alpha\left(r(t+1) + \gamma \max_{a(t+1)} Q(s(t+1),\,a(t+1))\right)$$

with $\alpha \subset [0,1]$ a learning rate, Q(s, a) a previous quality value, r(t + 1) a reward, $\gamma \subset [0,1]$ a discount rate, s(t + 1) a next state, and a(t + 1) an action executable from state s(t + 1), so as to determine an optimal Q-function.

4. Training method according to any of Claims 1 to 3, wherein the action (a(t)) is selected from a set of actions containing:

- modification of the value of the field of a header of the malware;
- addition of a character string extracted from a benign file to the contents of the malware;
- addition of determined characters or instructions to the contents of the malware;
- addition of a library extracted from a benign file to the contents of the malware;
- renaming a section of the contents of the malware;
- removal of a debugger mode from the contents of the malware;
- modification of a timestamp of the contents of the malware;
- modification of a hash value calculated for an optional header of the contents of the malware; and,
- decompression of an executable version of the malware.

5. Computer program comprising instructions for implementing a training method according to any of Claims 1 to 4, when said program is executed by a computer.

6. Computer-readable recording medium on which is recorded a computer program according to Claim 5.

7. Method of assessing the detectability of malware by an environment implementing at least one piece of anti-malware software, the method comprising:

- reception (E200), from an autonomous agent implementing a reinforcement learning algorithm, of an action (a(t)) aimed at modifying the contents of the malware;
- modification (E220) of the contents of the malware by application of said action (a(t)), so as to obtain modified malware;
- analysis (E230), by the anti-malware software, of the modified malware;
- and transmission (E250), to the autonomous agent, of a reward (r(t+1)) representative of a probability that the malware modified by application of the selected action (a(t)) would be considered benign by the anti-malware software, the reward being defined such that:

$$r(t+1) = \begin{cases} R \subset R^+ & \text{if } p(t+1) < T \\ p(t+1) - p(t) & \text{otherwise} \end{cases}$$

where R is a positive real value, T is a threshold value specific to the anti-malware software, p(t+1) is a detectability score representative of a probability that the malware modified by application of the selected action (a(t)) would be considered malicious by the anti-malware software, and p(t) is the detectability score obtained with application of an action selected in the previous iteration.

8. Assessing method according to Claim 7, further comprising generation of an association between the action (a(t)), and either the score p(t+1), or the reward r(t+1), in an associative array.

9. Computer program comprising instructions for implementing an assessing method according to Claim 7 or 8, when said program is executed by a computer.

10. Computer-readable recording medium on which is recorded a computer program according to Claim 9.

11. Method for training anti-malware software implementing a learning algorithm, the method comprising:

- obtainment of a plurality of pieces of malware modified according to a method for assessing the detectability of malware by an environment implementing at least one piece of anti-malware software according to Claim 7, each piece of malware of the plurality having a detectability score (p(t+1)) representative of a probability that the modified malware would be considered malicious by the anti-malware software, the score of each piece of malware of the plurality being less than a defined value;
- labelling said pieces of malware as malicious; and,
- training the anti-malware software with the labelled malware.

12. Computer program comprising instructions for implementing a training method according to Claim 11, when said program is executed by a computer.

13. Computer-readable recording medium on which is recorded a computer program according to Claim 12.

14. Autonomous agent implementing a reinforcement learning algorithm to improve the performance of anti-malware software, the agent also implementing a training method according to any of Claims 1 to 4.

15. Environment for assessing the detectability of malware by anti-malware software, the environment implementing the assessing method according to Claim 7 or 8.

[Fig. 1]

[Fig. 2]

[Fig. 3]

200

MOD_OB_ACT — 210

MOD_MOD_LM — 220

MOD_PROC — 230

MOD_GEN — 240

[Fig. 4]

| 3 |
| PROG_AG |
| PROG_ENV |

| 5 |

| 1 |

| 4 |

| 2 |

1000

[Fig. 5A-5B]

| 15 | 11 | **13**<br>**PROG_AG** |
| 14 | | 12 |

5A

510

| 25 | 21 | **23**<br>**PROG_ENV** |
| 24 | | 22 |

5B

520

[Fig. 6]

[Fig. 7]

[Fig. 8]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Leaming to Evade Static PE Machine Learning Malware Models via Reinforcement Learning. **HYRUM S ANDERSON et al.** ARXIV.ORG. CORNELL UNIVERSITY LIBRARY, 26 January 2018
- Enhancing Machine Learning Based Malware Detection Model by Reinforcement Learning. **CANGSHUAI WU et al.** COMMUNICATION AND NETWORK SECURITY. ACM, 02 November 2018, 74-78
- Robust Android Malware Detection System against Adversarial Attacks using Q-Learning. **HEMANT RATHORE et al.** ARXIV.ORG. CORNELL UNIVERSITY LIBRARY, 27 January 2021
- **RICHARD S. SUTTON** ; **ANDREW G. BARTO**. Reinforcement Learning, An introduction, Second Edition. The MIT Press, 2018

- **MNIH, V.** ; **KAVUKCUOGLU, K** ; **SILVER, D. et al.** Human-Level Control Through Deep Reinforcement Learning. *Nature*, 2015, vol. 518, 529-533
- **RICHARD S. SUTTON** ; **ANDREW G. BARTO**. Reinforcement Learning, An introduction. The MIT Press, 2018
- **WILLIAMS, R.J.** ; **MACH LEARN**. *Simple statistical gradientfollowing algorithms for connectionist reinforcement learning*, 1992, vol. 8, 229-256
- **H. ANDERSON**. EMBER: An Open Dataset for Training Static PE Malware Machine Learning Models. *ArXiv*, 2018
- **E. RAFF**. Malware Detection by Eating a Whole EXE. *ArXiv*, 2017
- **B. MARAIS**. Malware Analysis with Artificial Intelligence and a Particular Attention on Results Interpretability. *ArXiv*, 2021